(19) Europäisches Patentamt / European Patent Office / Office européen des brevets

(11) **EP 2 702 194 B1**

(12) **FASCICULE DE BREVET EUROPEEN**

(45) Date de publication et mention
de la délivrance du brevet:
**18.03.2015 Bulletin 2015/12**

(21) Numéro de dépôt: **12716443.2**

(22) Date de dépôt: **25.04.2012**

(51) Int Cl.:
***D02G 3/48*** *(2006.01)*

(86) Numéro de dépôt international:
**PCT/EP2012/057546**

(87) Numéro de publication internationale:
**WO 2012/146612 (01.11.2012 Gazette 2012/44)**

(54) **CABLE TEXTILE COMPOSITE ARAMIDE-POLYCETONE**

VERBUNDTEXTILKORD AUS ARAMID/POLYKETON

ARAMID/POLYKETONE COMPOSITE TEXTILE CORD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.04.2011 FR 1153632**

(43) Date de publication de la demande:
**05.03.2014 Bulletin 2014/10**

(73) Titulaires:
- **Compagnie Générale des Etablissements
Michelin
63000 Clermont-Ferrand (FR)**
- **MICHELIN Recherche et Technique S.A.
1763 Granges-Paccot (CH)**

(72) Inventeur: **LE CLERC, Christophe
63040 Clermont-Ferrand Cedex 9 (FR)**

(74) Mandataire: **Ribière, Joel
Manufacture Française des
Pneumatiques Michelin
23, place des Carmes-Déchaux
DGD/PI - F35 - Ladoux
63040 Clermont-Ferrand Cedex (FR)**

(56) Documents cités:
EP-A2- 2 002 995     JP-A- 2003 055 855
US-A1- 2009 283 195

## Description

### DOMAINE DE L'INVENTION

**[0001]** La présente invention est relative aux renforts textiles utilisables notamment pour le renforcement d'articles en caoutchouc tels que des pneumatiques, en particulier pour le renforcement des armatures de sommet ou des armatures de carcasse de tels pneumatiques.

**[0002]** Elle se rapporte plus particulièrement à des retors ou câblés textiles du type composites ou hybrides, aussi appelés parfois « bi-modules », constitués de matériaux textiles présentant des modules en extension, et plus généralement des propriétés mécaniques, notablement différents d'un matériau à l'autre.

### ETAT DE LA TECHNIQUE

**[0003]** Les retors ou câblés textiles hybrides, constitués de deux matériaux textiles différents, sont bien connus, ils ont été utilisés depuis fort longtemps pour améliorer certaines propriétés d'usage, grâce notamment à des compromis améliorés entre propriétés mécaniques, propriétés thermiques et résistance à la fatigue.

**[0004]** Les plus utilisés jusqu'à ce jour pour le renforcement des pneumatiques sont des câblés hybrides du type aramide-nylon, comportant à la fois des brins en aramide et des brins en nylon, en particulier des constructions à deux brins (aramide/nylon) voire à trois brins (aramide/aramide/nylon). De tels câblés et leurs constructions particulières ont été décrites en détail dans un grand nombre de documents brevet, par exemple dans EP 335 588, EP 467 585, US 3 977 172, US 4 155 394, US 5 558 144, EP 1 075 968 ou US 6 533 012, US 6 799 618, WO 02/085646 ou US 7 905 265.

**[0005]** Ces câblés hybrides aramide-nylon ne sont toutefois pas dépourvus d'inconvénients.

**[0006]** EP 2002 995 décrit un câblé textile comprenant au moins 50% en poids total de matériau polycéton. JP 2003 055 855 décrit un câblé textile avec un rapport pondéral aramide/polycéton de 1,04 et une torsion identiques pour les différents brins.

**[0007]** Tout d'abord, l'inconvénient du nylon est qu'il présente un faible module initial en extension, particulièrement à chaud (typiquement 150°C et plus), ce qui peut entraîner une dégradation des performances de roulage des pneus sous des conditions de températures particulièrement élevées. D'autre part, la contraction thermique du nylon est relativement élevée, ce qui peut être à l'origine de difficultés de dimensionnement satisfaisant des enveloppes de pneus lors de leurs différentes étapes de fabrication puis de cuisson.

**[0008]** Enfin, les fortes différences de module en extension entre les deux types de matériaux, aramide et nylon, entraînent de manière connue des rapports module final/module initial particulièrement élevés, certes parfois visés, notamment pour une utilisation en armature de sommet des pneumatiques, mais qui peuvent aussi être préjudiciables dans certains cas, en particulier pour certaines utilisations en armature de carcasse.

**[0009]** Ainsi, les concepteurs de pneumatiques, pour certaines applications, sont à la recherche de matériaux pouvant se substituer avantageusement au nylon dans les câblés textiles hybrides tels que décrits ci-dessus.

**[0010]** En particulier, la demande WO 2008/092712 (ou US 2009/0283195) a proposé d'utiliser une fibre polycétone en lieu et place d'une fibre nylon, pour la fabrication de câblés hybride aramide/polycétone destinés au frettage de ceintures de pneumatiques susceptibles de rouler à haute vitesse. Ces câblés se caractérisent par une contraction thermique réduite, ce qui permet de mieux contrôler le dimensionnement des pneumatiques lors des différentes étapes de leur fabrication.

**[0011]** L'expérience montre toutefois que les câblés hybrides décrits dans cette demande, à construction conventionnelle, à savoir constitués d'un seul brin en aramide et d'un seul brin en polycétone, de préférence de même titre, qui sont retordus avec une torsion identique, peuvent être encore optimisés.

### BREVE DESCRIPTION DE L'INVENTION

**[0012]** Au cours de leurs recherches, les Demanderesses ont trouvé un câblé textile composite aramide/ polycétone nouveau dont la construction spécifique permet de manière inattendue d'améliorer le compromis des propriétés mécaniques, force-rupture, module initial et ténacité, des câblés textiles composites aramide/polycétone.

**[0013]** Ainsi, selon un premier objet, la présente invention concerne un câblé textile composite aramide/ polycétone utilisable notamment pour le renforcement de pneumatiques, comportant au moins un brin multifilamentaire en aramide et au moins un brin multifilamentaire en polycétone retordus ensemble, les filaments élémentaires constitutifs du brin multifilamentaire en aramide étant retordus selon un facteur de torsion $K_1$ et les filaments élémentaires constitutifs du brin multifilamentaire en polycétone étant retordus selon un facteur de torsion $K_2$, caractérisé en ce que dans ledit câblé :

- o le rapport pondéral aramide/ polycétone est supérieur à 1,5 ;
- o le rapport $K_2$ / $K_1$ est supérieur à 1,10.

L'invention concerne également l'utilisation d'un tel câblé textile comme élément de renforcement d'articles ou produits semi-finis en caoutchouc tels que des pneumatiques, ainsi que ces articles, produits semi-finis en caoutchouc et pneumatiques eux-mêmes, tant à l'état cru (c'est-à-dire avant cuisson ou vulcanisation) qu'à l'état cuit (après cuisson).

Les pneumatiques de l'invention, en particulier, peuvent être destinés à des véhicules à moteur du type tourisme, 4x4, "SUV" *(Sport Utility Vehicles)*, mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention.

Le câblé textile de l'invention est tout particulièrement destiné à être utilisé dans des armatures de sommet (ou ceintures) comme dans des armatures de carcasse de pneumatiques pour les véhicules décrits ci-dessus.

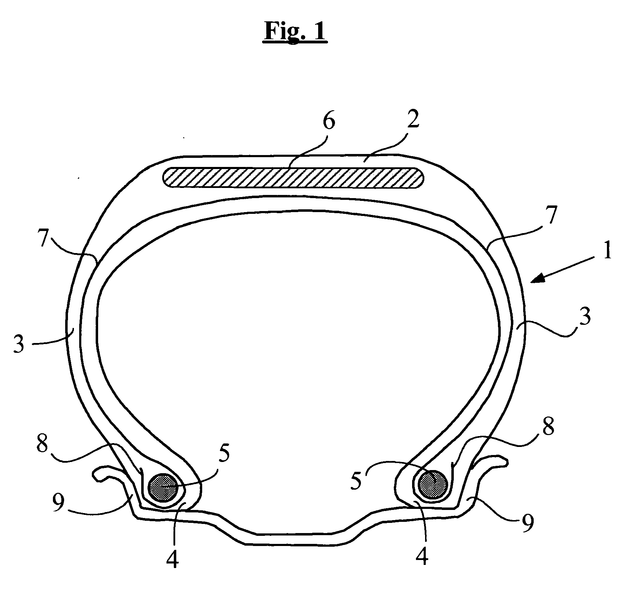

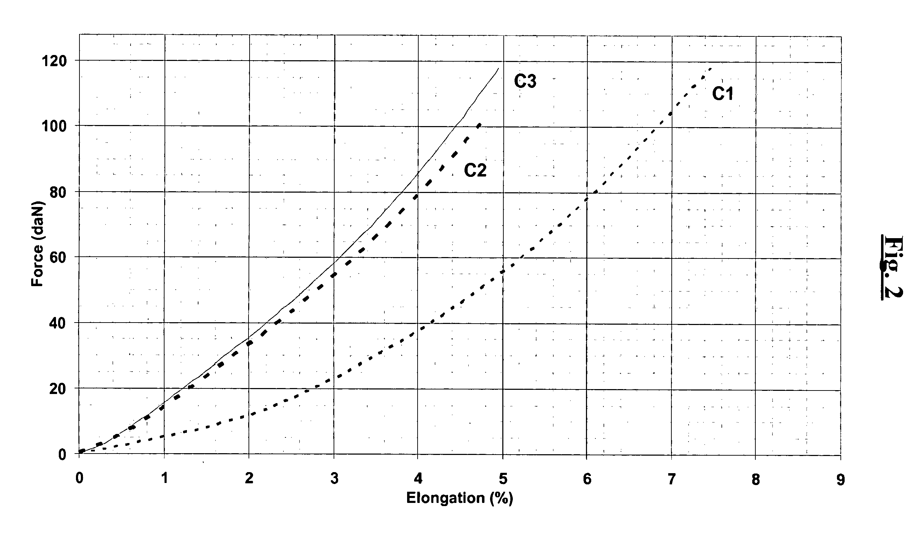

L'invention ainsi que ses avantages seront aisément compris à la lumière de la description détaillée et des exemples de réalisation qui suivent, ainsi que des figures 1 et 2 relatives à ces exemples qui schématisent (sauf indication contraire, sans respect d'une échelle spécifique) :

- en coupe radiale, un exemple de bandage pneumatique conforme à l'invention, incorporant un câblé textile selon l'invention (Fig. 1) ;
- des courbes contrainte-élongation enregistrées sur des câblés textiles composites conformes ou non à l'invention (Fig. 2).

DESCRIPTION DETAILLEE DE L'INVENTION

Dans la présente demande, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le câblé ou retors textile de l'invention est donc un câblé textile composite aramide/ polycétone comportant au moins un (c'est-à-dire un ou plusieurs) brin (ou fibre) multifilamentaire en aramide, et au moins un (c'est-à-dire un ou plusieurs) brin (ou fibre) multifilamentaire en polycétone qui sont retordus ensemble, les filaments élémentaires constitutifs du brin multifilamentaire en aramide étant retordus selon un facteur de torsion $K_1$ et les filaments élémentaires constitutifs du brin multifilamentaire en polycétone étant retordus selon un facteur de torsion $K_2$.

Pour un compromis optimisé de ses propriétés mécaniques, force-rupture, module initial et ténacité, ce câblé textile de l'invention possède les deux caractéristiques essentielles suivantes :

   o le rapport pondéral aramide/ polycétone est supérieur à 1,5 ;
   o le rapport $K_2 / K_1$ est supérieur à 1,10.

Par fibre dite « aramide », on rappelle de manière bien connue qu'il s'agit d'une fibre de macromolécules linéaires formées de groupes aromatiques liés entre eux par des liaisons amides dont au moins 85 % sont directement liées à deux noyaux aromatiques, et plus particulièrement de fibres en poly(p-phénylène téréphtalamide) (ou PPTA), fabriquées depuis fort longtemps à partir de compositions de filage optiquement anisotropes.

Le terme « polycétone » (en abrégé « PK ») se réfère à un polymère thermoplastique obtenu par polycondensation d'éthylène et de monoxyde de carbone. Les fibres en polycétone ont elles aussi été décrites dans un très grand nombre de documents brevet (voir par exemple EP 310 171, EP 456 306, EP 1 925 467, WO 2002/068738 ou US 6 818 728, US 2007/0017620, US 2009/0266462).

Le rapport pondéral aramide/ polycétone, comme son nom l'indique, représente le rapport du poids total de matériau aramide (donc poids total du brin ou des brins, s'ils sont plusieurs, en aramide) sur le poids total de matériau polycétone (donc poids total du brin ou des brins, s'ils sont plusieurs, en polycétone).

Conformément à l'invention, ce rapport pondéral est supérieur à 1,5, de préférence supérieur à 2,0, plus préférentiellement encore supérieur à 3,0.

Quant au facteur K, on rappellera ici que, dans un câblé textile, le facteur de torsion d'un brin multifilamentaire (plus exactement, des filaments élémentaires constitutifs dudit brin) s'exprime selon la relation qui suit :

$$K = (\text{Torsion en tours/mètre}) \times [(\text{Titre du brin (en tex)} / (1000.\rho)]^{1/2}$$

dans laquelle la torsion est exprimée en tours par mètre de brin, le titre du brin est exprimé en tex (poids en gramme de 1000 mètres de brin), et enfin p est la densité ou masse volumique (en g/cm$^3$) du matériau constitutif du brin (environ 1,44 pour aramide, 1,14 pour nylon et 1,30 pour polycétone).

Conformément à l'invention, pour un comportement mécanique optimal du câblé de l'invention jusqu'aux niveaux des allongements les plus élevés, le rapport $K_2 / K_1$ est supérieur à 1,10, de préférence supérieur à 1,20, plus préférentiellement encore supérieur à 1,25.

Le câblé textile de l'invention comporte un ou plusieurs brins multifilamentaires en aramide. Préférentiellement le titre de chaque brin en aramide est compris entre 100 et 450 tex, plus préférentiellement compris entre 150 et 400 tex. La torsion de chaque brin en aramide est de préférence comprise entre 150 et 400 tours par mètre, plus préférentiellement comprise entre 200 et 350 tours par mètre.

Le câblé textile de l'invention comporte un ou plusieurs brins multifilamentaires en polycétone. De préférence, le titre de chaque brin en polycétone est compris entre 100 et 400 tex, plus préférentiellement compris entre 150 et 250 tex. La torsion de chaque brin en polycétone est de préférence comprise entre 200 et 600 tours par mètre, plus préférentiellement entre 350 et 500 tours par mètre.

Selon un mode de réalisation particulièrement préférentiel, le câblé textile composite de l'invention comporte deux brins en aramide et un seul brin en polycétone.

Selon un autre mode de réalisation préférentiel, le câblé de l'invention possède un module initial en extension, mesuré à 20°C, qui est supérieur à 1000 cN/tex, de préférence compris entre 1300 et 2000 cN/tex. Selon un autre mode de réalisation préférentiel, combiné ou non au précédent, le câblé de l'invention possède un module final en extension, mesuré à 20°C, qui est supérieur à 3000 cN/tex, de préférence compris entre 3500 et 4000 cN/tex.

Selon un autre mode de réalisation préférentiel, le rapport module final du câblé sur module initial du câblé, mesuré à 20°C, est inférieur à 4, plus préférentiellement compris entre 1,0 et 3,0. Une telle caractéristique offre notamment aux pneumatiques la possibilité de conserver une très bonne stabilité dimensionnelle, quelles que soient les conditions de vitesse ou de chargement de ces derniers.

Selon un autre mode de réalisation préférentiel, le module initial en extension du câblé, mesuré à 180°C, est supérieur à 300 cN/tex, plus préférentiellement compris entre 500 et 1500 cN/tex. La ténacité du câblé, mesurée à 20°C, est de préférence supérieure à 120 cN/tex, plus préférentiellement comprise entre 125 et 150 cN/tex.

Toutes les propriétés mécaniques énoncées ci-dessus sont bien connues de l'homme du métier, déduites des courbes force-allongement.

Selon un autre mode de réalisation préférentiel, le câblé textile composite de l'invention présente une contraction thermique (notée « CT ») de sa longueur, après 2 minutes à 185°C, sous une prétension de 0,5 cN/tex, qui est comprise entre 0,2 et 2,5%, plus préférentiellement comprise entre 0,5 et 2%. Une telle caractéristique préférentielle s'est révélée optimale pour la stabilité de fabrication et de dimensionnement des enveloppes de pneumatiques, en particulier lors des phases de cuisson et refroidissement des ces dernières.

CT est mesurée, sauf précisions différentes, selon la norme ASTM D1204-08, par exemple sur un appareil du type « TESTRITE ». A longueur constante, on mesure également le maximum de la force de contraction (notée $F_C$) au cours du test ci-dessus (2 min à 185°C). Le résultat est exprimé en cN/tex, donc ramené au titre de l'échantillon de câblé testé. Cette force de contraction, sur le câblé textile composite de l'invention, est préférentiellement comprise entre 1 et 2,5 cN/tex, plus préférentiellement comprise entre 1,4 et 2,0 cN/tex ; une force de contraction élevée est particulièrement favorable à la capacité de frettage des câblés textiles vis-à-vis de l'armature de sommet du pneumatique lorsque ce dernier s'échauffe sous haute vitesse de roulage.

<u>EXEMPLES DE REALISATION DE L'INVENTION</u>

Le câblé textile de l'invention est avantageusement utilisable pour le renforcement de pneumatiques de tous types de véhicules, en particulier de motos, véhicules tourisme ou véhicules industriels tels que Poids-lourd, Génie civil, avions, autres véhicules de transport ou de manutention.

A titre d'exemple, la figure 1 représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9.

L'armature de carcasse 7 est de manière connue en soi constituée d'au moins une nappe de caoutchouc renforcée par des câblés textiles dits "radiaux", c'est-à-dire que ces câblés sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La ceinture 6 est par exemple constituée, de manière connue en soi, par au moins deux nappes de caoutchouc dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 6 comporte en outre dans cet exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels ont pour fonction première, on le rappelle, de résister à la centrifugation du sommet à haute vitesse.

Ce pneumatique 1 de l'invention a par exemple pour caractéristique essentielle qu'au moins la nappe de frettage de sa ceinture (6) et/ou son armature de carcasse (7) comporte un câblé textile selon l'invention. Selon un autre exemple de mode de réalisation possible de l'invention, ce sont par exemple les tringles (5) qui pourraient être constituées, en tout ou partie, d'un câblé textile selon l'invention.

Les compositions de caoutchouc utilisées pour ces nappes sont des compositions conventionnelles pour calandrage de renforts textiles, typiquement à base de caoutchouc naturel, de noir de carbone, d'un système de vulcanisation et des additifs usuels. L'adhésion entre le câblé textile composite de l'invention et la couche de caoutchouc qui l'enrobe est assurée par exemple par une colle usuelle du type RFL.

La figure 2 reproduit quant à elle des courbes force-élongation, notées C1, C2 et C3, enregistrées sur des câblés textiles composites à l'état encollé, conformes ou non à l'invention, utilisables dans les exemples de pneumatiques précédemment décrits.

La courbe C1 correspond à un câblé textile composite témoin noté C-I : de construction notée A/A/N (pour Aramide/Aramide/Nylon), il est constitué de deux brins multifilamentaire en Aramide (titre initial de chaque brin égal à 334 tex) et d'un brin multifilamentaire en Nylon (titre initial égal à 188 tex) qui sont retordus ensemble à 230 tours/mètre.

La courbe C2 correspond à un autre câblé textile composite témoin noté C-II : de construction notée A/A/P (pour Aramide/Aramide/Polycétone), il est constitué de deux brins multifilamentaire en aramide (titre initial de chaque brin égal à 334 tex) et d'un brin multifilamentaire en polycétone (titre initial égal à 167 tex) qui sont retordus ensemble à 230 tours/mètre. La construction de ce câblé C-II est similaire à celle du câblé C-I, c'est-à-dire que les différents brins sont retordus à torsion identique, comme décrit notamment dans la demande WO 2008/092712 citée en introduction de la présente description.

Enfin, la courbe C3 correspond à un câblé textile conforme à l'invention noté C-III : également de construction A/A/P, il est constitué de deux brins multifilamentaire en aramide (titre initial de chaque brin égal à 334 tex) et d'un brin multifilamentaire en polycétone (titre initial égal à 167 tex), qui sont retordus ensemble d'une part à 230 tours/mètre en ce qui concerne les deux brins en aramide, d'autre part à 400 tours/mètre en ce qui concerne le brin en polycétone.

Pour la fabrication par retordage des câblés ci-dessus, on rappellera ici simplement, de manière bien connue de l'homme du métier, que chaque brin constitutif du câblé final est tout d'abord individuellement tordu sur lui-même dans une direction donnée (par exemple torsion en S de 230 tours par mètre de brin) au cours d'une première étape, puis que les brins ainsi tordus sur eux-mêmes sont ensuite retordus ensemble en sens inverse (par exemple torsion en Z de 230 tours par mètre de brin) pour l'obtention du câblé textile final.

La spécificité du câblé de l'invention (C-III), comparativement aux deux câblés témoins (C-I et C-II), est que le brin en polycétone est beaucoup plus tordu sur lui-même que les deux brins en aramide, lors de la première étape. Ceci se traduit sur le câblé final par un déséquilibre de torsion prononcé : au final, sur le câblé terminé de fabrication, les deux brins en aramide sont équilibrés en torsion (pas de torsion ou quasiment pas de torsion résiduelle sur les filaments aramide eux-mêmes dans le câblé) alors que le brin en polycétone est encore surtordu sur lui-même (torsion résiduelle de 170 tours par mètre sur les filaments PK eux-mêmes). Grâce à cette construction, le rapport des facteurs de torsion ($K_2/K_1$) est très nettement supérieur à 1,10, en l'occurrence dans cet exemple égal à environ 1,29.

Le tableau unique annexé résume la construction et les propriétés respectives des trois types de câblés textiles composites.

Toutes les propriétés mécaniques indiquées sont mesurées sur des câblés textiles encollés (c'est-à-dire prêts à l'emploi, ou bien extraits de l'article en caoutchouc qu'ils renforcent) ayant été soumis à un conditionnement préalable ; par "conditionnement préalable", on entend le stockage des câblés (après séchage) pendant au moins 24 heures, avant mesure, dans une atmosphère standard selon la norme européenne DIN EN 20139 (température de 20 $\pm$ 2'C ; hygrométrie de 65 $\pm$ 2 %).

Le titre (ou densité linéique) des brins élémentaires ou des câblés est déterminé sur au moins trois échantillons, chacun correspondant à une longueur de 50 m, par pesée de cette longueur ; le titre est donné en tex (poids en grammes de 1000 m de produit - rappel: 0, 111 tex égal à 1 denier).

Les propriétés mécaniques en extension (ténacité, module initial, allongement à la rupture) sont mesurées de manière connue à l'aide d'une machine de traction « INSTRON ». Les échantillons testés subissent une traction sur une longueur initiale de 400 mm à une vitesse nominale de 200 mm/min, sous une prétension standard de 0,5 cN/tex. Tous les résultats donnés sont une moyenne de 10 mesures.

La ténacité (force-rupture divisée par le titre) et les modules en extension (module initial et module final) sont indiqués en cN/tex ou centinewton par tex (pour rappel, 1 cN/tex égal à 0, 11 g/den (gramme par denier)). Le module initial est défini comme la pente de la partie linéaire de la courbe Force-Allongement qui intervient juste après une prétension standard de 0,5 cN/tex. Le module final est défini comme la pente de la partie linéaire de la courbe Force-Allongement qui intervient juste avant la rupture (fin de la courbe Force-Allongement). L'allongement à la rupture est indiqué en pourcentage.

A la lecture de ce tableau, comme illustré par ailleurs par l'allure des courbes de traction correspondantes (courbe C3 comparée aux courbes C1 et C2), on note en particulier les points suivants :

- tout d'abord, et de manière attendue, les câblés hybrides C-II et C-III, à base de polycétone, présentent des propriétés thermiques nettement améliorées par rapport au câblé hybride à base de nylon : module initial à haute température (180°C) supérieur, contraction thermique moindre et force de contraction supérieure ;
- seul le câblé de l'invention C-III, dans lequel rapport pondéral aramide/ polycétone est bien supérieur à 1,5 (égal à 4,0 dans cet exemple), présente un coefficient $K_2$ supérieur à $K_1$ (rapport $K_2/K_1$ égal à 1,29 dans cet exemple), donc un déséquilibre de torsion marqué ;
- ce déséquilibre de torsion améliore notablement les propriétés de force-rupture ($F_R$) et de ténacité (Te) à 20°C, comparativement au câblé témoin C-II ;
- en outre, comparativement au câblé de référence aramide-nylon (C-I), la construction spécifique du câblé de l'invention C-III permet de maintenir la force-rupture tout en réduisant de manière notable le rapport module final/module initial ;
- enfin, le câblé conforme à l'invention est celui présentant la ténacité la plus élevée.

En conclusion, grâce d'une part à un déséquilibre de torsion marqué ($K_2/K_1 > 1,10$) entre les brins aramide et polycétone et grâce d'autre part à un rapport pondéral (aramide/ polycétone) suffisant, il est possible d'améliorer le compromis des propriétés mécaniques, en particulier force-rupture, module initial et ténacité (à 20°), des câblés textiles composites aramide/polycétone, tout en offrant à ces derniers des valeurs de module initial à haute température qui sont nettement supérieures à celles disponibles sur des câblés textiles composites usuels du type aramide/nylon.

**Tableau**

| Construction et propriétés des câblés textiles composites testés : | | | |
|---|---|---|---|
| Câblé composite N° : | C-I | C-II | C-III |
| Courbe Force-élongation N° : | C1 | C2 | C3 |
| Nature des brins : | A/A/N | A/A/P | A/A/P |
| Titre des brins (en tex) | 334/334/188 | 334/334/167 | 334/334/167 |
| Titre du câblé (en tex) | 960 | 940 | 925 |
| Torsion des brins (en tours/m) | 230/230/230 | 230/230/230 | 230/230/400 |
| $K_1/K_1/K_2$ | 111/111/93 | 111/111/82 | 111/111/143 |
| $K_2/K_1$ | 0,84 | 0,74 | 1,29 |
| $F_R$ (force rupture en daN) (20°C) | 116 | 102 | 118 |
| Te (ténacité en cN/tex) (20°C) | 120 | 108 | 128 |
| Mi (module initial en cN/tex) (20°C) | 490 | 1595 | 1620 |
| Mf (module final en cN/tex) (20°C) | 2890 | 3065 | 3750 |
| Mf / Mi | 5.9 | 1.9 | 2.3 |
| CT (contraction thermique %) (185°C) | 1.6 | 0.6 | 0.6 |
| Fc (force contraction cN/tex) (185°C) | 0.96 | 1.70 | 1.73 |
| Mi (module initial en cN/tex) (180°C) | 149 | 940 | 960 |

**Revendications**

1. Câblé textile composite aramide/ polycétone utilisable notamment pour le renforcement de pneumatiques, comportant au moins un brin multifilamentaire en aramide et au moins un brin multifilamentaire en polycétone retordus ensemble, les filaments élémentaires constitutifs du brin multifilamentaire en aramide étant retordus selon un facteur de torsion $K_1$ et les filaments élémentaires constitutifs du brin multifilamentaire en polycétone étant retordus selon un facteur de torsion $K_2$, Le facteur de torsion K s'exprimant selon la relation: K = (Torsion en tours/mètre)$\times$[(Titre du brin en tex/(1000.p)]$^{1/2}$ dans laquelle p est la densité ou masse volumique en g/cm$^3$ du matériau constitutif du brin **caractérisé en ce que** dans ledit câblé :

   o le rapport pondéral aramide/ polycétone est supérieur à 1,5 ;
   o le rapport $K_2 / K_1$ est supérieur à 1,10.

2. Câblé textile selon la revendication 1, dans lequel le rapport $K_2 / K_1$ est supérieur à 1,20, de préférence supérieur à 1,25.

3. Câblé textile selon la revendication 1 ou 2, dans lequel le titre de chaque brin multifilamentaire en aramide est compris entre 100 et 450 tex, de préférence entre 150 et 400 tex.

4. Câblé textile selon l'une quelconque des revendications 1 à 3, dans lequel le titre de chaque brin multifilamentaire en polycétone est compris entre 100 et 400 tex, de préférence entre 150 et 250 tex.

5. Câblé textile selon l'une quelconque des revendications 1 à 4, dans lequel la torsion de chaque brin multifilamentaire en aramide est comprise entre 150 et 400 tours par mètre, de préférence entre 200 et 350 tours par mètre.

6. Câblé textile selon l'une quelconque des revendications 1 à 5, dans lequel la torsion de chaque brin multifilamentaire en polycétone est comprise entre 200 et 600 tours par mètre, de préférence entre 350 et 500 tours par mètre.

7. Câblé textile selon l'une quelconque des revendications 1 à 6, comportant deux brins en aramide et un brin en polycétone.

8. Câblé textile selon l'une quelconque des revendications 1 à 7, dans lequel le rapport pondéral aramide/ polycétone est supérieur à 2,0, de préférence supérieur à 3,0.

9. Câblé textile selon l'une quelconque des revendications 1 à 8, dans lequel le module initial en extension du câblé, mesuré à 20°C, est supérieur à 1000 cN/tex, de préférence compris entre 1300 et 2000 cN/tex et le module final en extension du câblé, mesuré à 20°C, est supérieur à 3000 cN/tex, de préférence compris entre 3500 et 4000 cN/tex.

10. Câblé textile selon l'une quelconque des revendications 1 à 9, dans lequel le rapport module final du câblé sur module initial du câblé, mesuré à 20°C, est inférieur à 4, de préférence compris entre 1,0 et 3,0.

11. Câblé textile selon l'une quelconque des revendications 1 à 10, dans lequel le module initial en extension du câblé, mesuré à 180°C, est supérieur à 300 cN/tex, de préférence compris entre 500 et 1500 cN/tex.

12. Câblé textile selon l'une quelconque des revendications 1 à 11, dans lequel la ténacité du câblé, mesurée à 20°C, est supérieure à 120 cN/tex, de préférence comprise entre 125 et 150 cN/tex.

13. Câblé textile selon l'une quelconque des revendications 1 à 12, dans lequel la contraction thermique (CT) du câblé après 2 minutes à 185°C, sous une prétension de 0,5 cN/tex, est comprise entre 0,2 et 2,5%, de préférence entre 0,5 et 2%.

14. Câblé textile selon l'une quelconque des revendications 1 à 13, dans lequel la force de contraction du câblé après 2 minutes à 185°C, sous longueur constante et une prétension de 0,5 cN/tex, est comprise entre 1 et 2,5 cN/tex, de préférence entre 1,4 et 2,0 cN/tex.

15. Pneumatique (1) renforcé par un câblé textile composite selon l'une quelconque des revendications 1 à 14.

**Patentansprüche**

1. Aramid/Polyketon-Verbundtextilkord, der insbesondere für die Verstärkung von Luftreifen verwendbar ist und wenigsten seine Multifilamentfaser aus Aramid und wenigstens eine Multifilamentfaser aus Polyketon, die miteinander verdrillt sind, umfasst, wobei die Elementarfilamente, aus denen die Multifilamentfaser aus Aramid besteht, mit einem Verdrillungsfaktor $K_1$ verdrillt sind und die Elementarfilamente, aus denen die Multifilamentfaser aus Polyketon besteht, mit einem Verdrillungsfaktor $K_2$ verdrillt sind, wobei der Verdrillungsfaktor K gemäß der folgenden Beziehung gegeben ist:

   K = (Verdrillung in Windungen/Meter) $\times$ [(Titer der Faser in Tex/(1000 · p)]$^{1/2}$, wobei p die Dichte oder Volumenmasse in g/cm$^3$ des die Faser bildenden Materials ist, **dadurch gekennzeichnet, dass** in dem Kord:

   - das Gewichtsverhältnis von Aramid zu Polyketon größer als 1,5 ist; und
   - das Verhältnis $K_2/K_1$ größer als 1,10 ist.

2. Textilkord nach Anspruch 1, wobei das Verhältnis $K_2/K_1$ größer als 1,20, vorzugsweise größer als 1,25 ist.

3. Textilkord nach Anspruch 1 oder 2, wobei der Titer jeder Multifilamentfaser aus Aramid zwischen 100 und 450 Tex, vorzugsweise zwischen 150 und 400 Tex liegt.

4. Textilkord nach einem der Ansprüche 1 bis 3, wobei der Titer jeder Multifilamentfaser aus Polyketon zwischen 100 und 400 Tex, vorzugsweise zwischen 150 und 250 Tex liegt.

5. Textilkord nach einem der Ansprüche 1 bis 4, wobei die Verdrillung jeder Multifilamentfaser aus Aramid zwischen 150 und 450 Windungen pro Meter, vorzugsweise zwischen 200 und 350 Windungen pro Meter liegt.

6. Textilkord nach einem der Ansprüche 1 bis 5, wobei die Verdrillung jeder Multifilamentfaser aus Polyketon zwischen 200 und 600 Windungen pro Meter, vorzugsweise zwischen 350 und 500 Windungen pro Meter liegt.

7. Textilkord nach einem der Ansprüche 1 bis 6, der zwei Fasern aus Aramid und eine Faser aus Polyketon umfasst.

8. Textilkord nach einem der Ansprüche 1 bis 7, wobei das Gewichtsverhältnis von Aramid/Polyketon größer als 2,0, vorzugsweise größer als 3,0 ist.

9. Textilkord nach einem der Ansprüche 1 bis 8, wobei der anfängliche Streckmodul des Kords gemessen bei 20 °C größer als 1000 cN/Tex ist und vorzugsweise zwischen 1300 und 2000 cN/Tex liegt und der endgültige Streckmodul des Kords gemessen bei 20 °C größer als 3000 cN/Tex ist und vorzugsweise zwischen 3500 und 4000 cN/Tex liegt.

10. Textilkord nach einem der Ansprüche 1 bis 9, wobei das Verhältnis des endgültigen Moduls des Kords zu dem anfänglichen Modul des Kords gemessen bei 20 °C kleiner als 4 ist und vorzugsweise zwischen 1,0 und 3,0 liegt.

11. Textilkord nach einem der Ansprüche 1 bis 10, wobei der anfängliche Streckmodul des Kords, gemessen bei 180 °C, größer als 300 cN/Tex ist und vorzugsweise zwischen 500 und 1500 cN/Tex liegt.

12. Textilkord nach einem der Ansprüche 1 bis 11, wobei die Zugfestigkeit des Kords gemessen bei 20 °C größer als 120 cN/Tex ist und vorzugsweise zwischen 125 und 150 cN/Tex liegt.

13. Textilkord nach einem der Ansprüche 1 bis 12, wobei die thermische Kontraktion (CT) des Kords nach 2 Minuten bei 185 °C nach einer Vorspannung von 0,5 cN/Tex zwischen 0,2 und 2,5 % und vorzugsweise zwischen 0,5 und 2 % liegt.

14. Textilkord nach einem der Ansprüche 1 bis 13, wobei die Kontraktionskraft des Kords nach 2 Minuten bei 185 °C bei konstanter Länge und einer Vorspannung von 0,5 cN/Tex zwischen 1 und 2,5 cN/Tex und vorzugsweise zwischen 1,4 und 2,0 cN/Tex liegt.

15. Luftreifen (1), der durch einen Verbundtextilkord nach einem der Ansprüche 1 bis 14 verstärkt ist.

**Claims**

1. Aramid/polyketone composite textile cord that can be used in particular for reinforcing tyres, comprising at least one aramid multifilament strand and at least one polyketone multifilament strand that are twisted together, the constituent individual filaments of the aramid multifilament strand being twisted according to a twist factor $K_1$ and the constituent individual filaments of the polyketone multifilament strand being twisted according to a twist factor $K_2$, the twist factor K being expressed according to the relationship:

$$K = (\text{twist in turns/metre}) \times [(\text{linear density of the strand in tex}) / (1000.\rho)]^{1/2}$$

   wherein $\rho$ is the density or volumetric mass in $g/cm^3$ of the constituent material of the strand, **characterized in that** in said cord:

   - the aramid/polyketone weight ratio is greater than 1.5;
   - the $K_2/K_1$ ratio is greater than 1.10.

2. Textile cord according to Claim 1, in which the $K_2/K_1$ ratio is greater than 1.20, preferably greater than 1.25.

3. Textile cord according to Claim 1 or 2, in which the linear density of each aramid multifilament strand is between 100 and 450 tex, preferably between 150 and 400 tex.

4. Textile cord according to any one of Claims 1 to 3, in which the linear density of each polyketone multifilament strand is between 100 and 400 tex, preferably between 150 and 250 tex.

5. Textile cord according to any one of Claims 1 to 4, in which the twist of each aramid multifilament strand is between 150 and 400 turns per metre, preferably between 200 and 350 turns per metre.

6. Textile cord according to any one of Claims 1 to 5, in which the twist of each polyketone multifilament strand is between 200 and 600 turns per metre, preferably between 350 and 500 turns per metre.

7. Textile cord according to any one of Claims 1 to 6, comprising two aramid strands and one polyketone strand.

8. Textile cord according to any one of Claims 1 to 7, in which the aramid/polyketone weight ratio is greater than 2.0, preferably greater than 3.0.

9. Textile cord according to any one of Claims 1 to 8, in which the initial tensile modulus of the cord, measured at 20°C, is greater than 1000 cN/tex, preferably between 1300 and 2000 cN/tex, and the final tensile modulus of the cord, measured at 20°C, is greater than 3000 cN/tex, preferably between 3500 and 4000 cN/tex.

10. Textile cord according to any one of Claims 1 to 9, in which the ratio of the final modulus of the cord to the initial modulus of the cord, measured at 20°C, is less than 4, preferably between 1.0 and 3.0.

11. Textile cord according to any one of Claims 1 to 10, in which the initial tensile modulus of the cord, measured at 180°C, is greater than 300 cN/tex, preferably between 500 and 1500 cN/tex.

12. Textile cord according to any one of Claims 1 to 11, in which the tenacity of the cord, measured at 20°C, is greater than 120 cN/tex, preferably between 125 and 150 cN/tex.

13. Textile cord according to any one of Claims 1 to 12, in which the thermal shrinkage (TS) of the cord after 2 minutes at 185°C, under a pretension of 0.5 cN/tex, is between 0.2% and 2.5%, preferably between 0.5% and 2%.

14. Textile cord according to any one of Claims 1 to 13, in which the shrinkage force of the cord after 2 minutes at 185°C, under constant length and a pretension of 0.5 cN/tex, is between 1 and 2.5 cN/tex, preferably between 1.4 and 2.0 cN/tex.

15. Tyre (1) reinforced by a composite textile cord according to any one of Claims 1 to 14.

**Fig. 1**

## Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 335588 A
- EP 467585 A
- US 3977172 A
- US 4155394 A
- US 5558144 A
- EP 1075968 A
- US 6533012 B
- US 6799618 B
- WO 02085646 A
- US 7905265 B
- EP 2002995 A
- JP 2003055855 B
- WO 2008092712 A
- US 20090283195 A
- EP 310171 A
- EP 456306 A
- EP 1925467 A
- WO 2002068738 A
- US 6818728 B
- US 20070017620 A
- US 20090266462 A